# EUROPEAN PATENT APPLICATION

(11) **EP 4 092 243 A1**
(43) Date of publication of application: **23.11.2022**
(21) Application number: 22170143.6
(22) Date of filing: 26.04.2022
(51) Int. Cl.: E06C 1/18, E06C 7/00, E06C 7/14

(54) **LADDER WITH BATTERY POWER, AND METHODS**

(30) Priority: 21.05.2021 US 202163191758 P; 10.11.2021 US 202117523784
(71) Applicant: WERNER CO., Greenville, PA 16125-9499 (US)
(72) Inventor: MCAULIFFE, Patrick, Chicago, IL 60646 (US); PARKER, Thomas W., Jamestown, PA 16134 (US)
(74) Representative: Haseltine Lake Kempner LLP

(57) **Abstract**

A ladder having a first front rail. The ladder has a second front rail in parallel and spaced relation with the first front rail. The ladder as a first rung attached to and positioned between the first front rail and the second front rail. The ladder as a receptacle attached to the ladder which is adapted to receive a battery. The receptacle having electrical contacts for the battery and an electrical outlet. The ladder has a wiring harness attached to the ladder and electrically connected to the electrical outlet to receive electricity from the battery. A method for providing electricity from a ladder. A method for making a ladder.

## Description

### CROSS-REFERENCE TO RELATED APPLICATIONS

This is a nonprovisional of U.S. provisional application serial number 63/191,758 filed May 21, 2021, incorporated by reference herein.

### FIELD OF THE INVENTION

The present invention is related to a ladder which may provide battery power for electricity. (As used herein, references to the "present invention" or "invention" relate to exemplary embodiments and not necessarily to every embodiment encompassed by the appended claims.) More specifically, the present invention is related to a ladder which may provide battery power for electricity through a receptacle attached to the ladder which is adapted to receive a battery to a wiring harness attached to the ladder in electrical communication to and electrical outlet of the receptacle.

### BACKGROUND OF THE INVENTION

This section is intended to introduce the reader to various aspects of the art that may be related to various aspects of the present invention. The following discussion is intended to provide information to facilitate a better understanding of the present invention. Accordingly, it should be understood that statements in the following discussion are to be read in this light, and not as admissions of prior art.

Electricity is commonly and extensively needed to operate an unlimited number of devices and systems. This means that there is a necessary reliance on electricity to accomplish tasks and complete projects. In regard to ladders, it is typical that electrical equipment, such as drills or sensors or power sprayers or computers or smart phones to name but a few, is brought up the ladder with the user for the user to perform his or her job. However, this also means that there needs to be readily available electricity to power this equipment.

In many situations, there is not present a constant source of electricity. The equipment itself may have batteries to run, but the batteries may fully discharge before the job is completed. It would be of great advantage to a user on a ladder to be able to have a source of electricity from the ladder itself so the user can operate his or her equipment as necessary, and not even have to climb down off the ladder to obtain electricity.

### BRIEF SUMMARY OF THE INVENTION

The present invention pertains to a ladder. The ladder comprises a first front rail. The ladder comprises a second front rail in parallel and spaced relation with the first front rail. The ladder comprises a first rung attached to and positioned between the first front rail and the second front rail. The ladder comprises a receptacle attached to the ladder which is adapted to receive a battery. The receptacle having electrical contacts for the battery and an electrical outlet. The ladder comprises a wiring harness attached to the ladder and electrically connected to the electrical outlet to receive electricity from the battery.

The present invention pertains to a method for providing electricity from a ladder. The method comprises the steps of placing a battery into a receptacle attached to the ladder into which a battery is disposed. The receptacle having electrical contacts for the battery and an electrical outlet. There is the step of providing electricity to a wiring harness attached to the ladder and electrically connected to the electrical outlet to receive electricity from the battery. The ladder having a first front rail, a second front rail in parallel and spaced relation with the first front rail, and a first rung attached to and positioned between the first front rail and the second front rail.

The present invention pertains to a method for making a ladder. The method comprises the steps of attaching a wiring harness to the ladder. There is the step of attaching a receptacle to the ladder into which is adapted to receive a battery. The receptacle having electrical contacts for the battery and an electrical outlet. The wiring harness electrically connected to the electrical outlet to receive electricity from the electrical outlet.

### BRIEF DESCRIPTION OF THE SEVERAL VIEWS OF THE DRAWING

In the accompanying drawings, the preferred embodiment of the invention and preferred methods of practicing the invention are illustrated in which:
Figure 1 shows a front view of a ladder which has a battery receptacle positioned underneath the top.
Figure 2 shows a rear view of a ladder which has a battery receptacle positioned underneath the top.
Figure 3 shows a male electrical connector inside the receptacle which is positioned to engage the female electrical connector on the battery pack when the battery pack is inserted.
Figure 4 shows a rear perspective view of the ladder and the female electrical connector on the battery pack.
Figure 5 shows the battery pack having been inserted into the receptacle.
Figure 6 shows the receptacle door in the closed position and the battery pack securely retained.
Figure 7A shows a front view of an alternative receptacle which is designed to hold three D-cell batteries electrically in series with one another.
Figure 7B shows a side view of the alternative receptacle.
Figure 7C shows a rear view of the alternative receptacle.
Figure 7D shows a perspective view of the alternative receptacle with the door open.
Figure 8A shows the batteries being inserted into the alternative receptacle.
Figure 8B shows the alternative receptacle with the door closed to retain the batteries.
Figure 8C shows the batteries disposed in the alternative receptacle.
Figure 9 shows routing of a wiring harness which connects the components to the battery pack receptacle.
Figure 10 is an electrical block diagram regarding the wiring harness.

### DETAILED DESCRIPTION OF THE INVENTION

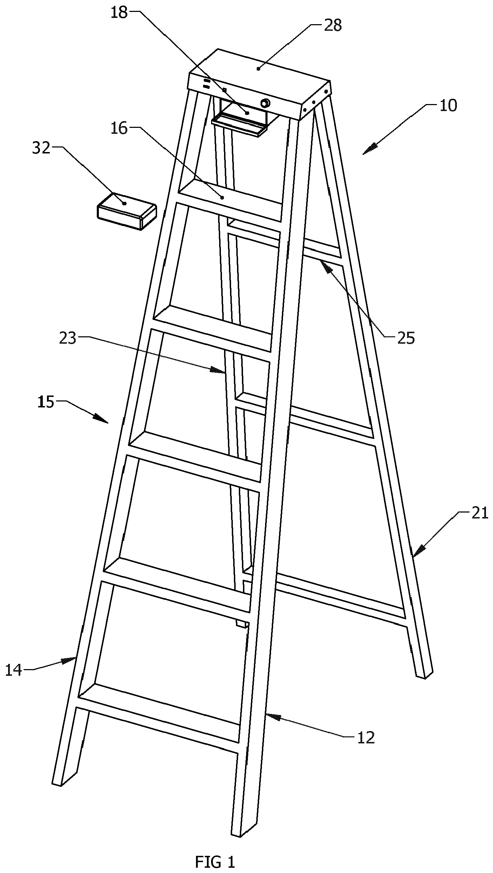

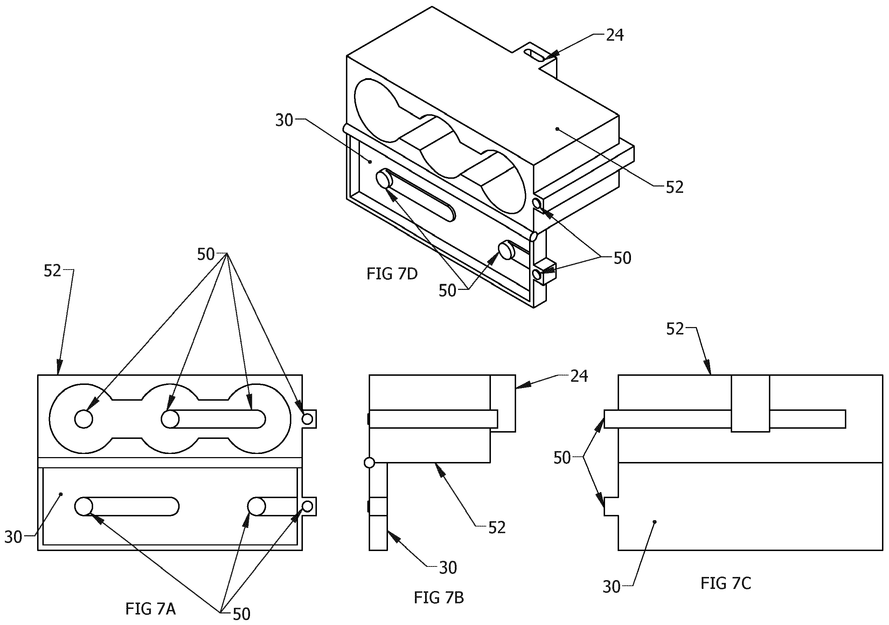

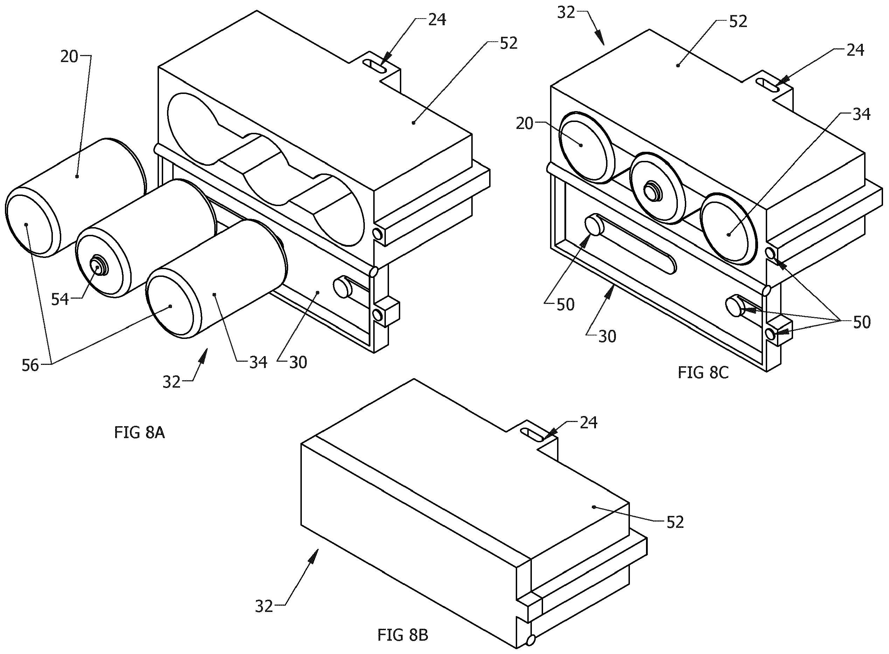

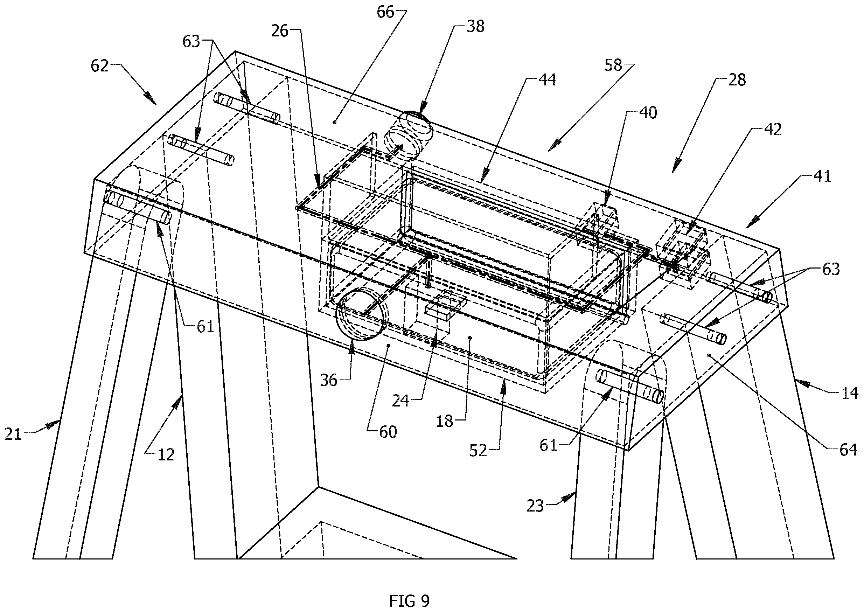

Referring now to the drawings wherein like reference numerals refer to similar or identical parts throughout the several views, and more specifically to figures 1-4 thereof, there is shown a ladder 10. The ladder 10 comprises a first front rail 12. The ladder 10 comprises a second front rail 14 in parallel and spaced relation with the first front rail 12. The ladder 10 comprises a first rung 16 attached to and positioned between the first front rail 12 and the second front rail 14 and may include additional rungs. The ladder 10 comprises a receptacle 18 attached to the ladder 10 which is adapted to receive a battery 20, as shown in figure 8A. The receptacle 18 having electrical contacts 50, as shown in figure 7A, for the battery 20 and an electrical outlet 24, as shown in figure 7D. The ladder 10 comprises a wiring harness 26, as shown in figure 9, attached to the ladder 10 and electrically connected to the electrical outlet 24 to receive electricity from the battery 20.

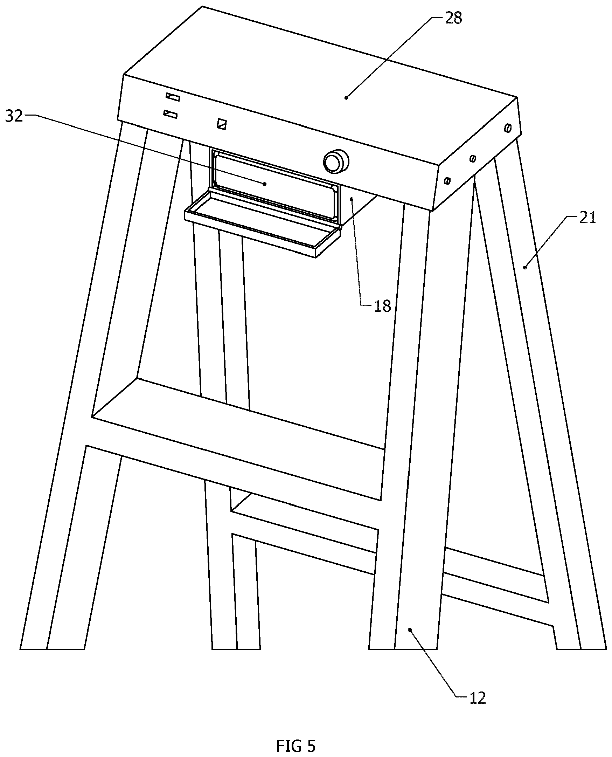

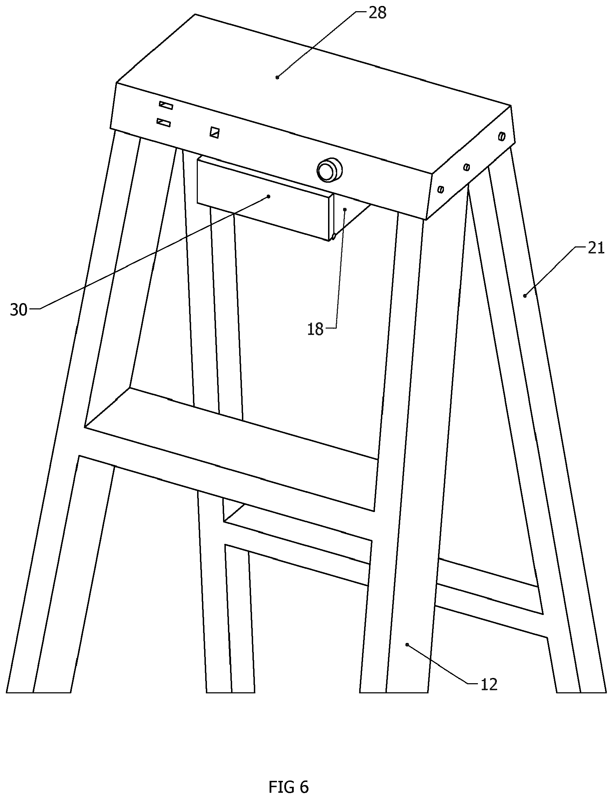

The ladder 10 may include a top 28 to which the first front rail 12 and second front rail 14 are attached, and wherein the receptacle 18 is attached to the top 28. See figures 5 and 6. The receptacle 18 may include a door 30 which opens to allow the battery 20 to be placed into or removed from the receptacle 18.

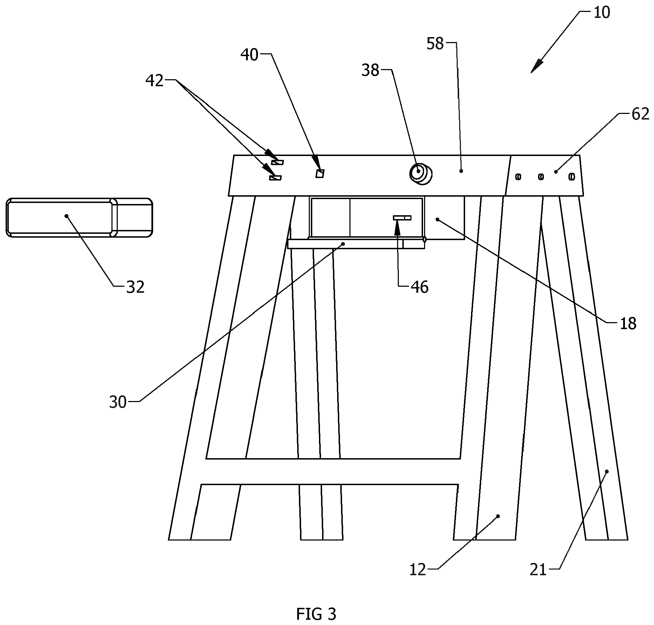

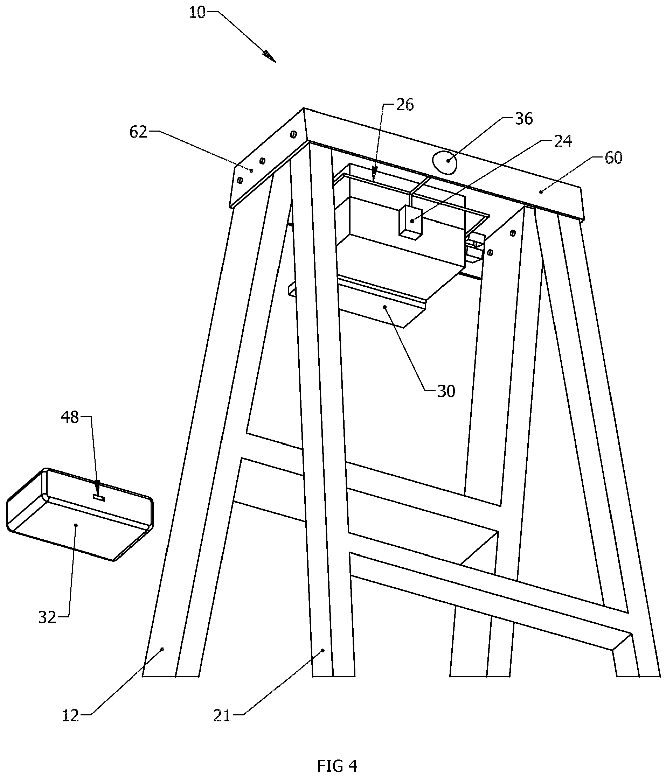

The battery 20 may be part of a battery pack 32 having at least one additional battery 34. See figures 6-8C. The battery pack 32 being able to be disposed in the receptacle 18 and provide electricity to the wiring harness 26 through the electrical outlet 24 and being able to be removed from the receptacle 18. Figures 3 and 4 show a male electrical connector 46 inside the receptacle 18 which is positioned to engage the female electrical connector 48 on the battery pack 32 when the battery pack 32 is inserted.

The top 28 may have a light 36, a light switch 38 in communication with the light 36 to turn the light 36 on or off, a recharge socket 40 and an electrical interface 41, which includes a USB port 42, all of which are in electrical communication with the battery pack 32. See figure 9. The wiring harness 26 may be disposed throughout the top 28 and electrically connects the light 36, the light switch 38, the recharge socket 40 and the USB port 42 with the receptacle 18. The wiring harness 26 may include wiring 44 that connects the light 36, the light switch 38, the recharge socket 40 and the USB port 42 with the receptacle 18. The ladder top 28 may include only the light 36 in the light switch 38, or only the USB port 42, or only the recharge socket 40 and the USB port 42, or any combination thereof, as well as multiple USB ports 42 or multiple lights 36 and multiple light switches 38, or other types of electrical interfaces 41 which provide electrical power to electrically powered devices. The wiring harness 26 may be embedded in the plastic of the top 28 by being positioned in the mold when the top 28 is blow molded or injection molded. Alternatively, the wiring harness 26 may be attached to the underside of the top 28 and electrically connected to any ports, sockets, lights 36 or switches 38 that are present in the top 28.

The present invention pertains to a method for providing electricity from a ladder 10. The method comprises the steps of placing a battery 20 into a receptacle 18 attached to the ladder 10 into which the battery 20 is disposed. The receptacle 18 having electrical contacts 50 for the battery 20 and an electrical outlet 24. There is the step of providing electricity to a wiring harness 26 attached to the ladder 10 and electrically connected to the electrical outlet 24 to receive electricity from the battery 20. The ladder 10 having a first front rail 12, a second front rail 14 in parallel and spaced relation with the first front rail 12, and a first rung 16 attached to and positioned between the first front rail 12 and the second front rail 14. There may be the step of electrically connecting an electrical power source to a recharge socket 40 in a top 28 of the ladder 10 to recharge the battery 20.

The present invention pertains to a method for making a ladder 10. The method comprises the steps of attaching a wiring harness 26 to the ladder 10. There is the step of attaching a receptacle 18 to the ladder 10 into which is adapted to receive a battery 20. The receptacle 18 having electrical contacts 50 for the battery 20 and an electrical outlet 24. The wiring harness 26 electrically connected to the electrical outlet 24 to receive electricity from the electrical outlet 24. The step of attaching a wiring harness 26 to the ladder 10 may include the step of attaching a ladder top 28 of the ladder 10 having the wiring harness 26 to the front and rear rails of the ladder 10.

This invention is a way to make DC power available on a ladder 10. This invention consists of a receptacle 18 attached to the ladder 10 into which a battery 20 is placed. The act of installing the battery 20 connects the battery 20 to a wiring harness 26 which is part of the ladder 10. The wiring harness 26 may connect to items such as USB ports 42 and lights 36. Additionally, the wiring harness 26 may connect to a recharge socket 40 which permits the recharging of the battery 20 while it is in its installed position with the ladder 10.

This invention can make use of off-the-shelf battery packs 32 which are commercially available for charging cell phones. This invention can also be designed to make use of individual batteries 20 such as D-cells.

The battery pack 32 or individual batteries 20 are easily connected to the wiring harness 26 to power lights 36, recharge cell phones etc. If the battery pack 32 is rechargeable, it need not be removed from the receptacle 18 for recharging if desired. The receptacle 18 securely retains the battery pack 32 or batteries 20 and protects them from damage when moving or transporting the ladder 10.

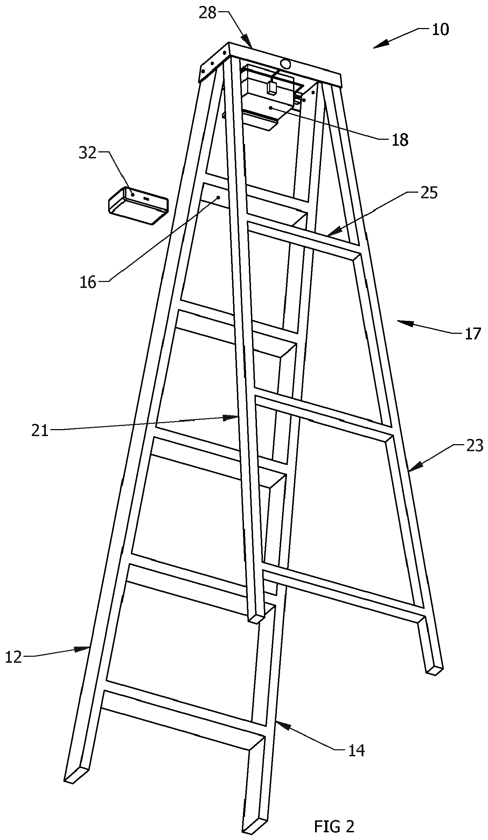

Figures 1 and 2 show two views of a ladder 10 which has a battery receptacle 18 positioned underneath the top 28. The receptacle 18 is shown open and ready to receive a battery pack 32. The receptacle 18 can be integral with the top 28, forming one continuous piece, or made as a separate part which is fastened to the top 28 or to some other part of the ladder 10, such as a rung or a rail. Wherever it is mounted, it is electrically connected to a wiring harness 26 on the ladder 10 by wiring 44.

Figure 3 shows a male electrical connector 46 inside the receptacle 18 which is positioned to engage the female electrical connector 48 on the battery pack 32 when the battery pack 32 is inserted into the receptacle 18. From the male connector 46, power is routed into a wiring harness 26 in the ladder top 28, where it could be connected to various components such as USB ports 42, a light switch 38 and light 36, and a recharge socket 40 if the battery pack 32 is a rechargeable type. The USB ports 42, light switch 38, light 36 and recharge socket 40 may be embedded in the top 28, being positioned in the mold when the plastic top 28 is formed by blow molding or injection molding, so the top 28 with any USB ports 42, switches 38, lights 36 and sockets are one piece. Alternatively, the top 28, when it is formed, may have slots or openings in which a USB port 42, light switch 38, light 36 or recharge socket 40 may be inserted in place in the top 28 by friction fit, with the wiring harness 26 positioned in place to electrically contact them. Figure 4 shows a rear perspective view of the ladder 10 and the female electrical connector 48 on the battery pack 32.

Figure 5 shows the battery pack 32 having been inserted into the receptacle 18. Figure 6 shows the of receptacle 18 door 30 in the closed position and the battery pack 32 securely retained. Figures 7A-7D show an alternative embodiment of a receptacle 18 which is designed to hold three D-cell batteries 20 electrically in series with one another. Figures 8A-8C show the batteries being inserted into the housing 52 of the receptacle 18 and the door 30 of the receptacle 18 closed to retain them. With this embodiment, the housing 52 of the receptacle 18 fixed to the bottom of the ladder top 28, for instance, with clips attached to the bottom of the ladder top 28, with the outlet 24 positioned to electrically engage with the wiring harness 26 of the top 28.

Figure 9 shows routing of a wiring harness 26 which connects the components to the battery pack 32 receptacle 18. Figure 9 also shows the top 28 has a front flange 58, a rear flange 60, a right flange 62 and a left flange 64. Each of the flanges extend down from the surface 66 of the top 28. The first front rail 12 and the first rear rail 21 are attached to the inside of the right-side flange 62 and the second front rail 14 and the second rear rail 23 are attached to the inside of the left side flange 64. The first front rail 12 and the second front rail 14 are fixedly attached with front fasteners 63 to the right-side flange 62 and left side flange 64, respectively, and the first rear rail 21 and the second rear rail 23 are rotatably attached with rear fasteners 61 to the right-side flange 62 and the left side flange 64, respectively, as is well known in the art. This way, the rear section 17, comprising the first rear rail 21 and the second rear rail 23 and rear rung 25, can rotate between an open use position, where it forms an upside-down v shape with the front section 15, comprising the first front rail 12 and second front rail 14 and front rung 16, and a closed position, where it is alongside and in parallel with the front section 15. The light switch 38 may be disposed in the front flange 58 and the light 36 may be disposed in the rear flange 60. The USB ports 42 and recharge socket 40 may be disposed in the front flange 58 or the rear flange 60 or even the right or left flanges 62, 64, as long as they are in electrical connection with the wiring harness 26.

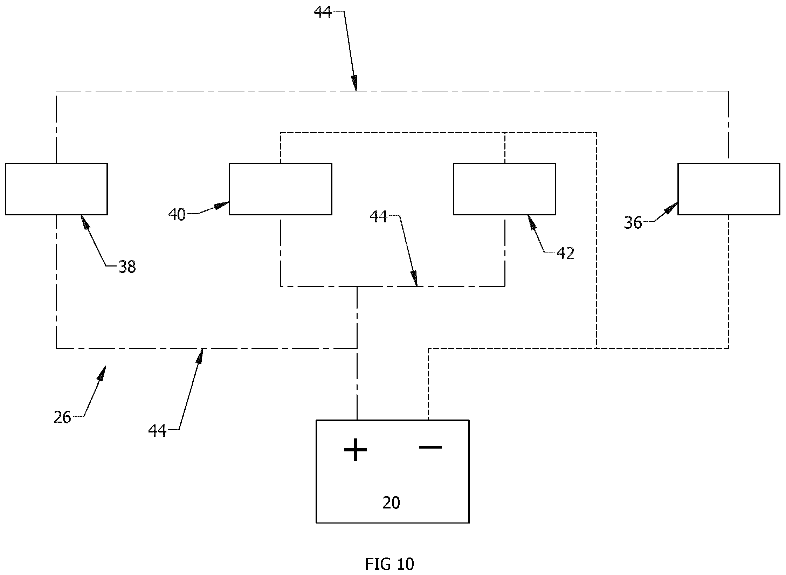

Figure 10 is an electrical block diagram showing the electrical connectivity of the light switch 38, recharge socket 40, USB ports 42 and light 36 with the battery 20. The light switch 38, recharge socket 40 and USB ports 42 are all directly electrically connected with the positive terminal 54 of the battery 20 to receive electricity through the wiring 44 of the wiring harness 26. The recharge socket 40 and the USB ports 42 are directly electrically connected with the negative terminal 56 to complete the circuit to ground. The light switch 38 is directly electrically connected to the light 36 to provide electricity to the light 36 when the light switch 38 is turned on. The light 36 is directly electrically connected to the negative terminal 56 of the battery 20 to complete the circuit to ground.

Although the invention has been described in detail in the foregoing embodiments for the purpose of illustration, it is to be understood that such detail is solely for that purpose and that variations can be made therein by those skilled in the art without departing from the scope of the following claims.

## Claims

1. A ladder comprising:
a first front rail;
a second front rail in parallel and spaced relation with the first front rail;
a first rung attached to and positioned between the first front rail and the second front rail;
a receptacle attached to the ladder which is adapted to receive an electrical power source, which includes a battery, the receptacle having electrical contacts for the battery and an electrical outlet; and
a wiring harness attached to the ladder and electrically connected to the electrical outlet to receive electricity from the electrical power source.

2. The ladder of Claim 1 including a top to which the first front rail and second front rail are attached, and wherein the receptacle is attached to the top.

3. The ladder of Claim 1 or 2 wherein the receptacle includes a door which opens to allow the battery to be placed into or removed from the receptacle.

4. The ladder of any preceding claim wherein the battery is part of a battery pack having at least one additional battery, the battery pack being able to be disposed in the receptacle and provide electricity to the wiring harness through the electrical outlet and being able to be removed from the receptacle.

5. The ladder of any preceding claim when appendant to claim 2 wherein the top includes an electrical interface electrically connected to the receptacle to receive electricity from the receptacle to provide electricity to electrically powered devices.

6. The ladder of any preceding claim when appendant to claim 2 wherein the top has a light, a light switch in communication with the light to turn the light on or off, a recharge socket and a USB port, all of which are in electrical communication with the battery pack.

7. The ladder of Claim 6 wherein the wiring harness is disposed throughout the top and electrically connects the light, the light switch, the recharge socket and the USB port with the receptacle.

8. The ladder of Claim 6 or 7 wherein the wiring harness includes wiring that connects the light, the light switch, the recharge socket and the USB port with the receptacle.

9. A method for providing electricity from a ladder comprising the steps of:
placing a battery into a receptacle attached to the ladder into which the battery is disposed, the receptacle having electrical contacts for the battery and an electrical outlet; and
providing electricity to a wiring harness attached to the ladder and electrically connected to the electrical outlet to receive electricity from the battery, the ladder having a first front rail, a second front rail in parallel and spaced relation with the first front rail, and a first rung attached to and positioned between the first front rail and the second front rail.

10. The method of Claim 9 including the step of electrically connecting an electrical power source to a recharge socket in a top of the ladder to recharge the battery.

11. A method for making a ladder comprising the steps of:
attaching a wiring harness to the ladder; and
attaching a receptacle to the ladder into which is adapted to receive a battery, the receptacle having electrical contacts for the battery and an electrical outlet, the wiring harness electrically connected to the electrical outlet to receive electricity from the electrical outlet.
